# EUROPEAN PATENT APPLICATION

(11) **EP 2 299 175 A1**
(43) Date of publication of application: **23.03.2011**
(21) Application number: 09794413.6
(22) Date of filing: 06.07.2009
(51) Int. Cl.: F23D 14/66, F23C 3/00, F23D 14/12, F23L 15/02

(54) **RADIANT TUBE BURNER DEVICE AND HEAT STORING ELEMENT UNIT CAPABLE OF BEING MOUNTED TO RADIANT TUBE BURNER**

(30) Priority: 07.07.2008 JP 2008176926
(71) Applicant: JP Steel Plantech Co., Yokohama-shi Kanagawa-ken 221-0056 (JP)
(72) Inventor: TSUTSUMI Michiaki, Yokohama-shi Kanagawa 221-0056 (JP)
(74) Representative: Patentship
(86) International application number: PCT/JP2009/062327
(87) International publication number: WO 2010/004969

(57) **Abstract**

A radiant tube burner and a heat storage element unit are provided whose structure is simple, and which have excellent durability and heat storage capabilities. A radiant tube burner apparatus that is used in a heating apparatus of a continuous annealing facility for steel strips includes a burner device 11 that is arranged at one end of a radiant tube 5; an air supply pipe 15 that supplies combustion air to the burner device 11; an exhaust pipe 17 that is connected to the other end of the radiant tube 5; a pair of heat storage elements 19 and 21 that are provided in a pipe system connecting the exhaust pipe 17 with the air supply pipe 15; a first four-way switching valve 31 that is arranged in a pipe system connecting the pair of heat storage elements 19 and 21 with the exhaust pipe 17; and a second four-way switching valve 33 that is arranged in a pipe system connecting the pair of heat storage elements 19 and 21 with the air supply pipe 15.

## Description

### TECHNICAL FIELD

The present invention relates to a radiant tube burner apparatus that can be arranged in a heating zone of a continuous annealing line for steel strips as well as a heat storage element unit that is attachable to a radiant tube burner.

### BACKGROUND ART

As technologies in which a heat storage element is applied to the exhaust heat recovery of a radiant tube burner, there are for example the disclosures in the publications JP H07-103435A, JP H10-103625A and JP H10-259905A.
In the technologies disclosed in these publications, a set made up of a heat storage element and a burner assembly including a main burner and a pilot burner is placed at each of the two ends of a radiant tube, an exhaust gas flow path is formed such that when one end functions as a burner, the other end serves as the heat storage side, and by operating a switching valve, the radiant tube burner side and the heat storage side are alternately switched.
Moreover, in all of these examples, a burner nozzle penetrates the inside of the heat storage element, and the burner tip is arranged behind the heat storage element.

### PRIOR ART DOCUMENTS

### PATENT DOCUMENTS

Patent Document 1: JP H07-103435A
Patent Document 2: JP H10-103625A
Patent Document 3: JP H10-259905A

### DISCLOSURE OF THE INVENTION

### Problems to be Solved by the Invention

In the conventional radiant tube burners, there are several problems, as will be explained in the following.

### THE PROBLEM OF HAVING A DUPLICATE COMBUSTION SYSTEM AND GREATER COMPLEXITY

In the conventional technology as disclosed in the patent documents listed above, a set of a burner and a heat storage element is arranged at both sides of the radiant tube, and the two burners are switched at predetermined time intervals to burn alternately. That is to say, while the burner at the one end burns, the burner at the other end is extinguished, the heat storage element on the side of the burning burner pre-heats the combustion air, whereas the heat storage element on the side of the extinguished burner recovers exhaust heat. The burning side and the extinguished side are switched at predetermined time intervals.

Due to this structure, two sets of main burner and pilot burner become necessary for one radiant tube, and also two sets of combustion gas supply pipe, shutoff valve, regulation valve, manual stop valve, ignition device, flame detector and the like become necessary.
Thus, in the conventional examples including a set of a burner and a heat storage element at both sides of the radiant tube, the structure becomes complex and also the costs for the facility become high, the controls for switching the devices become complex, and also the piping for the fuel gas and the combustion air system becomes complex, so that there is the problem that the number of daily checkups increases.
In order to reduce the number of daily checkups, a system has been proposed in which a plurality of radiant tubes are devised as one unit to share the combustion switching, and have a common fuel gas and combustion air supply system, but this does not change the fact that a regulation valve and measurement window is necessary for each of the burners.

### THE PROBLEM OF DURABILITY

Moreover, in the conventional technology, the burner tip (the front end of the burner or combustion tube) is placed behind the heat storage element for structural reasons, so that the burner tip of the extinguished burner on the exhaust gas side is exposed directly to the high-temperature combustion exhaust gas and is easily burnt out, which is disadvantageous with regard to high-temperature durability.
Moreover, since the burner tip and the temperature sensor are brought to glow by the high-temperature combustion exhaust gas, there is the problem that the flame detector is prone to erroneous detections after combustion switching.
It should be noted that as an example in which the burner tip is not exposed to the high-temperature exhaust gas, Patent Document 1 (JP H07-103435A) shows an example in which the nozzles of the main burner and the pilot burner are attached directly to a side surface of the radiant tube. However, in this case, since the combustion starts from the fuel gas supply opening of the side wall of the radiant tube, the combustion flame is off-center with respect to the radiant tube axis, so that the temperature distribution in circumferential direction of the radiant tube becomes uneven, and local heating or non-uniform thermal stress may occur. These flaws shorten the lifetime of the radiant tube and are also not desirable with regard to uniform heat radiation, which is a goal of a radiant tube.

### THE PROBLEM OF DIMENSIONAL LIMITATIONS ON THE HEAT STORAGE ELEMENT

In the example shown in Patent Document 3 (JP H10-259905A), the heat storage element is placed inside the radiant tube, and the burner combustion tube passes through its inside, so that due to this structure, there is a limitation on the volume of the heat storage element and the heat storage capacity cannot be made large enough. For this reason, it is difficult to attain a sufficient pre-heating air temperature, which is disadvantageous with regard to exhaust heat recovery. Moreover, the combustion switching cycle becomes short, and the switching valve operation frequency increases, which is disadvantageous with regard to mechanical durability.
Also, with this structure, the exhaust gas flow path volume in the heat storage element is restricted, so that the exhaust gas pressure loss increases, resulting in a volume increase of the exhaust gas fan.
It should be noted that Patent Document 3 (JP H10-259905A) proposes to provide a baffle plate at the entrance of the exhaust gas to the heat storage element, and to provide a collision plate at its exit, whereby the exhaust gas flows uniformly through the heat storage element. The object of this is to gain the effect of uniform heat storage, but the downside of this is the problem that the exhaust gas pressure loss increases and irregularities in the temperature in circumferential direction of the radiant tube occur.

The present invention is to solve the above-mentioned problems, and it is an object thereof to provide a radiant tube burner and a heat storage element unit that is attachable to a radiant tube burner that have a simple structure, excellent durability and excellent heat storage properties.

### MEANS TO SOLVE THE PROBLEMS

The conventional heat storage type radiant tube burners are provided with one burner each on both sides of one radiant tube, and these burners burn alternately, which causes the various problems mentioned above.
The inventors deviated from the conventional approach of providing a set of a burner and a heat storage element at both ends of the radiant tube, and as a result of studying the possibilities of an apparatus of a novel type in which one burner is provided at one end of a radiant tube in an apparatus of the heat storage type, the inventors conceived of the present invention.
Moreover, the inventors considered how a conventional radiant tube burner not having a heat storage element can be easily modified into one having a heat storage element, and conceived of the present invention.

(1) In accordance with the present invention, a radiant tube burner apparatus for use in a heating apparatus of a continuous annealing line for steel strips comprising a combustion air pipe supplying combustion air and an exhaust gas pipe for exhausting an exhaust gas, comprises:
a burner that is arranged at one end of a radiant tube;
an air supply opening that supplies the combustion air to the burner;
an exhaust opening that is arranged at the other end of the radiant tube;
a first four-way switching valve that is arranged in a path connecting the exhaust opening with the combustion air pipe;
a second four-way switching valve that is arranged in a path connecting the air supply opening with the exhaust gas pipe;
a first heat storage element that is arranged in one parallel path connecting the second four-way switching valve with the first four-way switching valve, and
a second heat storage element that is arranged in another parallel path connecting the second four-way switching valve with the first four-way switching valve;
wherein the first four-way switching valve can be switched between a gas flow in which the exhaust gas from the exhaust opening flows to the first heat storage element and the combustion air from the combustion air pipe flows to the second heat storage element, and a gas flow in which the exhaust gas from the exhaust opening flows to the second heat storage element and the combustion air from the combustion air pipe flows to the first heat storage element; and
the second four-way switching valve can be switched between a gas flow in which the exhaust gas that has passed through the first heat storage element flows to the exhaust gas pipe and the combustion air that has passed through the second heat storage element flows to the air supply opening, and a gas flow in which the
exhaust gas that has passed through the second heat storage element flows to the exhaust gas pipe and the combustion air that has passed through the first heat storage element flows to the supply opening.

(2) In the foregoing configuration of (1), the first four-way valve may comprise:
a valve casing made of a tube-shaped body having an opening portion at one end portion;
a rotation damper that is arranged inside the valve casing; and
wherein three connection openings that are provided in an outer circumferential surface of the valve casing;
the opening portion of the valve casing is connectable to the exhaust gas pipe; and
the gas flow can be switched by rotating the rotation damper.

(3) Moreover, a radiant tube burner apparatus for use in a heating apparatus of a horizontal continuous annealing line for heating steel strips while the steel strips are transported in horizontal direction, the heating apparatus comprising a combustion air pipe supplying combustion air and an exhaust gas pipe for exhausting an exhaust gas, comprises:
a plurality of radiant tube burners that are arranged horizontally along a direction in which said steel strip is moved;
each of the radiant tube burners comprising:
   a burner that is arranged at one end of a radiant tube;
   an air supply opening that supplies the combustion air to the burner;
   an exhaust opening that is arranged at the other end of the radiant tube;
   a first four-way switching valve that is arranged in a portion connecting the exhaust opening with the combustion air pipe;
   a second four-way switching valve that is arranged in a portion connecting the air supply opening with the exhaust gas pipe;
a first heat storage element that is arranged in a path connecting the second four-way switching valve with the first four-way switching valve, and a second heat storage element that is arranged in a path connecting the first four-way switching valve with a second four-way switching valve of a neighboring radiant tube burner;
wherein the first four-way switching valve can be switched between a gas flow in which the exhaust gas from the radiant tube burner flows to the first heat storage element and the combustion air from the combustion air pipe flows to the second heat storage element, and a gas flow in which the exhaust gas from the radiant tube burner flows to the second heat storage element, and the combustion air from the combustion air pipe flows to the first heat storage element; and
the second four-way switching valve can be switched between a gas flow in which the exhaust gas that has passed through the first heat storage element flows to the exhaust gas pipe, and the combustion air that has passed through the second heat storage element flows to the air supply opening, and a gas flow in which the combustion air that has passed through the first heat storage element flows to the air supply opening, and the exhaust gas from the neighboring radiant tube that has passed through the second heat storage element flows to the exhaust gas pipe.

(4) In the foregoing configuration of (1) or (3), the first four-way switching valve and/or the second four-way switching valve may comprise:
a tubular casing having a first connection opening and a second opening in a side surface,
a third connection opening provided at one end in axial direction of the casing,
a fourth connection opening provided at the other end in axial direction of the casing, and
a valve body forming a first flow path that is arranged within the casing and is turnable around the axis of the casing and that is communicatively connected to the third connection opening within the casing, and a second flow path that is communicatively connected to the fourth connection opening,
wherein the radiant tube burner apparatus is arranged such that, by turning the valve body, a switch is made between a flow path in which the first flow path is communicatively connected to the first connection opening and the second flow path is communicatively connected to the second connection opening, and a flow path in which the first flow path is communicatively connected to the second connection opening and the second flow path is communicatively connected to the first connection opening.

(5) In the foregoing configuration of (4), the valve body may be made of a tubular body that partitions the inside of the casing into a radially inner region and a radially outer region,
the first flow path may include a flow path that passes through the inside of the valve body and extends from an end portion of the valve body to the outside of the valve body, and
the second flow path may include a flow path that passes through the inside of the valve body and passes between the inside of the valve body and a flow path wall of the first flow path.

(6) In accordance with the present invention, a heat storage element unit that can be attached to a radiant tube burner that is arranged in a heating facility comprising a combustion air pipe and an exhaust gas pipe and that is provided with a burner only at one end portion of a radiant tube, comprises:
a first four-way switching valve that is arranged in a path connecting the exhaust opening with the combustion air pipe;
a second four-way switching valve that is arranged in a path connecting the air supply opening with the exhaust gas pipe;
a first heat storage element that is arranged in one parallel path connecting the second four-way switching valve with the first four-way switching valve, and a second heat storage element that is arranged in another parallel path connecting the second four-way switching valve with the first four-way switching valve;
wherein the first four-way switching valve can be switched between a gas flow in which the exhaust gas from the exhaust opening flows to the first heat storage element and the combustion air from the combustion air pipe flows to the second heat storage element, and a gas flow in which the exhaust gas from the exhaust opening flows to the second heat storage element, and the combustion air from the combustion air pipe flows to the first heat storage element; and
the second four-way switching valve can be switched between a gas flow in which the exhaust gas that has passed through the first heat storage element flows to the exhaust gas pipe, and the combustion air that has passed through the second heat storage element flows to the air supply opening, and a gas flow in which the exhaust gas that has passed through the second heat storage element flows to the exhaust gas pipe, and the combustion air that has passed through the first heat storage element flows to the supply opening.

(7) In the foregoing configuration of (6), the first four-way switching valve may comprise:
a valve casing made of a cylindrical body having an opening portion at one end portion;
a rotation damper that is arranged inside the valve casing; and
three connection openings that are provided in an outer circumferential surface of the valve casing;
wherein the opening portion of the valve casing is connectable to the exhaust gas pipe; and
the gas flow can be switched by rotating the rotation damper.

### EFFECT OF THE INVENTION

In accordance with the present invention, in a radiant tube burner apparatus of the heat storage type, a burner is provided only at one end of a radiant tube, so that it is not necessary to switch burners and steady combustion can be carried out, the various conventional problems can be solved, and an apparatus is accomplished whose structure is simple, and which has excellent durability and heat storage capabilities.

### BRIEF DESCRIPTION OF THE DRAWINGS

[FIG. 1] Fig. 1 is a diagram showing a radiant tube burner apparatus according to an embodiment of the present invention.
[FIG. 2] Fig. 2 is a diagram viewed in direction of the arrows A-A in Fig. 1, omitting the parts around the burner device 11.
[FIG. 3] Fig. 3 is an operation diagram of a radiant tube burner apparatus according to an embodiment of the present invention.
[FIG. 4] Fig. 4 is a diagram of Embodiment 2 of the present invention.
[FIG. 5] Fig. 5 is a diagram viewed in direction of the arrows B-B in Fig. 4.
[FIG. 6] Fig. 6 is a diagram of a second four-way switching valve in Embodiment 2 of the present invention.
[FIG. 7] Fig. 7 is a diagram of Embodiment 4 of the present invention showing three adjacent radiant tube burners.
[FIG. 8] Fig. 8 is a diagram of Embodiment 4 of the present invention showing the radiant tube burners at the zone ends.
[FIG. 9] Fig. 9 is a diagram of a first four-way switching valve used in Embodiment 4 of the present invention.
[FIG. 10] Fig. 10 is a diagram of a first four-way switching valve used in Embodiment 4 of the present invention.

### BEST MODE FOR CARRYING OUT THE INVENTION

### Embodiment 1

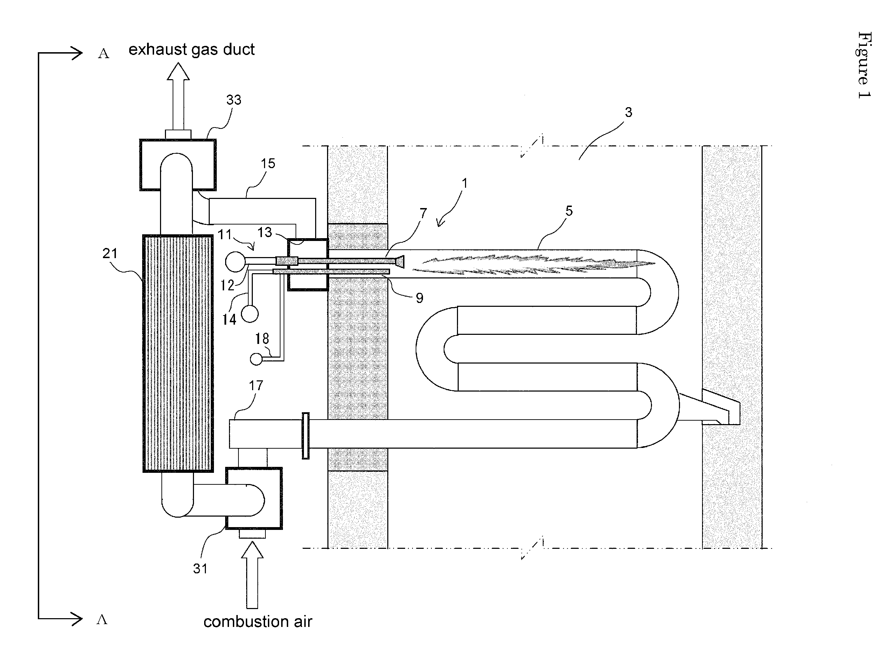

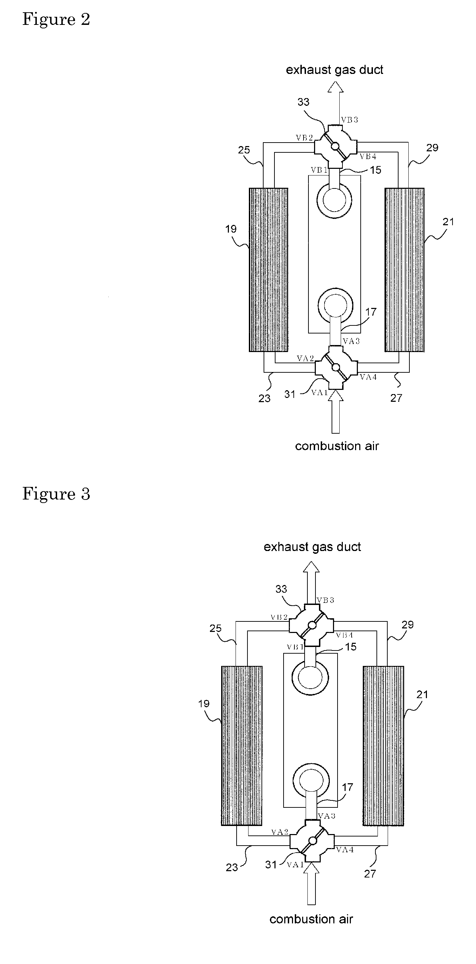

Fig. 1 is a diagram showing an embodiment of the present invention, and Fig. 2 is a diagram viewed in direction of the arrows A-A in Fig. 1. In the following, the present embodiment will be explained based on Figs. 1 and 2.
A radiant tube burner apparatus according to this embodiment uses a W-shaped radiant tube that is used in a vertical furnace for a continuous annealing line for steel strips.
As shown in Fig. 1, a burner device 11 made of a main burner 7 and a pilot burner 9 is arranged on one end of a radiant tube 5 that is arranged inside a furnace 3. An air supply opening 13 that supplies combustion air to the main burner 7 is provided, and an air supply pipe 15 is connected to this air supply opening 13. Furthermore, a fuel gas pipe 12 that supplies fuel gas is connected to the main burner 7. A combustion air pipe 14 that supplies combustion air and a fuel gas pipe 18 that supplies fuel gas are also connected to the pilot burner 9.
On the other hand, an exhaust pipe 17 is connected to an exhaust opening 16 at the other end of the radiant tube 5.

A pair of heat storage elements, including a first heat storage element 19 and a second heat storage element 21, are arranged on the outer side of the furnace 3 in which the radiant tube 5 is arranged (see Fig. 2). A first entry-side pipe 23 through which gas is introduced into the first heat storage element 19 is connected to one end of the first heat storage element 19, and a first exhaust-side pipe 25, through which gas that has passed through the first heat storage element 19 is exhausted, is connected to the other end of the first heat storage element 19. Similarly, a second entry-side pipe 27 is provided on the side of the second heat storage element 21 on which gas is introduced, and a second exhaust-side pipe 29 is connected to the side of the second heat storage element 21 on which gas is exhausted.
The heat storage elements are for temporarily storing the sensible heat of the combustion exhaust gas, and any heat storage element can be used, as long as it does not react with the combustion gas or has an adverse influence on the combustion air. Moreover, it is desirable that the heat storage elements have a large heat-transfer area, a small pressure loss, and excellent heat resistance, thermal shock resistance and corrosion resistance, so that for example ceramics, alumina or a refractory metal or the like may be used as a material of the heat storage elements.

As shown in Fig. 2, a first four-way switching valve 31 made of a butterfly valve is connected to the exhaust pipe 17. The first four-way switching valve 31 is provided with four connection openings (VA1) to (VA4), and one (VA3) of the four connection openings (VA1) to (VA4) of the first four-way switching valve 31 is connected to the exhaust pipe 17. Of the connection openings in Fig. 2 arranged in the horizontal direction in the figure and flanking the connection opening (VA3) that is connected to the exhaust pipe 17, the left connection opening (VA2) in the figure is connected to the first entry-side pipe 23 on the side of the first heat storage element 19, and the right connection opening (VA4) in the figure is connected to the second entry-side pipe 27 on the side of the second heat storage element 21. Moreover, the remaining one connection opening (VA1) of the first four-way switching valve 31 is connected to a combustion air pipe not shown in the drawings.

As shown in Fig. 2, a second four-way switching valve 33 made of a butterfly valve, like the first four-way switching valve 31, is connected to the air supply pipe 15. The second four-way switching valve 33 is provided with four connection openings (VB1) to (VB4), and one (VB1) of the connection openings is connected to the air supply pipe 15. Of the connection openings in Fig. 2 arranged in the horizontal direction in the figure and flanking the connection opening (VB1) that is connected to the air supply pipe 15, the left connection opening (VB2) in the figure is connected to the first exhaust-side pipe 25 on the side of the first heat storage element 19, and the right connection opening (VB4) in the figure is connected to the second exhaust-side pipe 29 of the second heat storage element 21. Moreover, the remaining one connection opening (VB3) of the second four-way switching valve 33 is connected to an exhaust gas duct not shown in the drawings.

The first four-way switching valve 31 and the second four-way switching valve 33 are driven by actuators not shown in the drawings, and these actuators are operated by control signals that are sent from a switching valve controller that is not shown in the drawings. The switching valve controller sends a switching signal at predetermined time intervals, and has the function of adjusting the operating speed of the actuators.

### OPERATION

The following is an explanation of the operation of the embodiment configured as explained above.
In the state shown in Fig. 2, the first four-way switching valve 31 communicatively connects the connection opening (VA1) with the connection opening (VA2), and communicatively connects the connection opening (VA3) with the connection opening (VA4). Consequently, the combustion air pipe is communicatively connected to the gas entry side of the first heat storage element 19, and the exhaust pipe 17 is communicatively connected to the gas entry side of the second heat storage element 21.
Moreover, the second four-way switching valve 33 communicatively connects the connection opening (VB1) with the connection opening (VB2), and communicatively connects the connection opening (VB3) with the connection opening (VB4). Consequently, the gas exhaust-side of the first heat storage element 19 is communicatively connected to the air supply pipe 15, and the gas exhaust-side of the second heat storage element 21 is communicatively connected to the exhaust gas duct.

When the burner burns in this state, the exhaust gas passes through the exhaust pipe 17, the first four-way switching valve 31, the second entry-side pipe 27, the second heat storage element 21, the second exhaust-side pipe 29, the second four-way switching valve 33 to the exhaust gas duct and is exhausted. In this situation, the second heat storage element 21 is pre-heated by the exhaust gas, and the exhaust heat is recovered. That is to say, in this state, the second heat storage element 21 is on the exhaust heat recovery side.
On the other hand, the combustion air is supplied through the first four-way switching valve 31, the first entry-side pipe 23, the first heat storage element 19, the first exhaust-side pipe 25, the second four-way switching valve 33 and the air supply pipe 15 to the burner device 11. In this situation, the combustion air is heated by heat exchange with the first heat storage element 19 when it passes the heat storage element, and then supplied to the burner device 11. That is to say, in this state, the first heat storage element 19 is on the combustion air heating side.

When operating for a predetermined period of time in the state shown in Fig. 2, the temperature of the first heat storage element 19 drops due to the passage of the introduced combustion air, and conversely, the temperature of the second heat storage element 21 rises due to the passage of exhaust gas. Then, since the heating of the combustion air becomes insufficient when the temperature of the first heat storage element 19 drops too much, the first four-direction switching valve 31 and the second four-direction switching valve 33 are switched by the switching valve controller to the state shown in Fig. 3 when a predetermined amount of time has passed.
In the state shown in Fig. 3, the first four-way switching valve 31 communicatively connects the connection opening (VA2) with the connection opening (VA3) and communicatively connects the connection opening (VA1) with the connection opening (VA4). Consequently, the exhaust pipe 17 is communicatively connected to the gas entry side of the first heat storage element 19, and the combustion air pipe is communicatively connected to the gas entry side of the second heat storage element 21.
Moreover, the second four-way switching valve 33 communicatively connects the connection opening (VB2) with the connection opening (VB3) and communicatively connects the connection opening (VB1) with the connection opening (VB4). Consequently, the gas exhaust side of the first heat storage element 19 is communicatively connected to the exhaust gas duct, and the air supply pipe 15 is communicatively connected to the gas exhaust side of the second heat storage element 21.

When the burner burns in this state, the exhaust gas passes through the exhaust pipe 17, the first four-way switching valve 31, the first entry-side pipe 23, the first heat storage element 19, the first exhaust-side pipe 25, the second four-way switching valve 33 to the exhaust gas duct and is exhausted. In this situation, the first heat storage element 19 is pre-heated, and the exhaust heat is recovered. That is to say, in this state, the first heat storage element 19 is on the exhaust heat recovery side.
On the other hand, the combustion air is supplied through the first four-way switching valve 31, the second entry-side pipe 27, the second heat storage element 21, the second exhaust-side pipe 29, the second four-way switching valve 33 and the air supply pipe 15 to the burner device 11. In this situation, the combustion air is heated by heat exchange with the second heat storage element 21 when it passes through the heat storage element, and then supplied to the burner device 11. That is to say, the second heat storage element 21 is on the combustion air heating side.

In the state of Fig. 2, the combustion air is pre-heated by passing through the first heat storage element 19, and the exhaust gas is cooled by passing through the second heat storage element 21. On the other hand, in the state of Fig. 3, the combustion air is pre-heated by passing through the second heat storage element 21, and the exhaust gas is cooled by passing through the first heat storage element 19.
By operating the first four-way switching valve 31 and the second four-way switching valve 33 at constant time intervals to switch between the state in Fig. 2 and the state in Fig. 3, the first heat storage element 19 and the second heat storage element 21 alternate between heat dissipation and heat absorption, and combustion air that is pre-heated to a high temperature is constantly supplied to the radiant tube burner 1, whereas exhaust gas is constantly exhausted at a low temperature.
Moreover, the burner can continue its regular combustion, and a more steady operation of the heating that is desirable for heating apparatuses can be realized. Moreover, there is only one burner, and there is no need for switching the burner, so that the construction is simplified and a device is accomplished that is superior with regard to maintenance, cost and reliability.

With the present embodiment configured as described above, the burner device 11 is provided on one side of the radiant tube 5, so that a duplicate combustion system is unnecessary. Thus, the durability and reliability of the burner components are improved. That is to say, the tip burnout explained in the section "Problems to be solved by the invention" is eliminated, and also the problem of erroneous detections by the flame detector due to tip burnout is eliminated.
Moreover, the first heat storage element 19 and the second heat storage element 21 are not arranged inside the radiant tube 5, but outside the furnace, so that there are few restrictions on their size and shape, and low pressure losses of the combustion air and the exhaust gas can be easily realized. Furthermore, since the volume of the heat storage elements can be made large, exhaust heat can be sufficiently recovered, and energy savings can be realized. Moreover, the exchange and the maintenance of the heat storage elements are facilitated.

It should be noted that in the present embodiment, the first four-way switching valve 31 and the second four-way switching valve 33 are shown to be butterfly valves, but they do not necessarily have to be of such a structure, and it is sufficient that their internal structure is such that they have four connection openings and can switch flow paths in the above-described manner.

Moreover, in the above-described embodiment, the radiant tube 5 was explained to be W-shaped, but the present invention is not limited to this, and it may also be U-shaped or of another suitable shape.

### SECOND EMBODIMENT

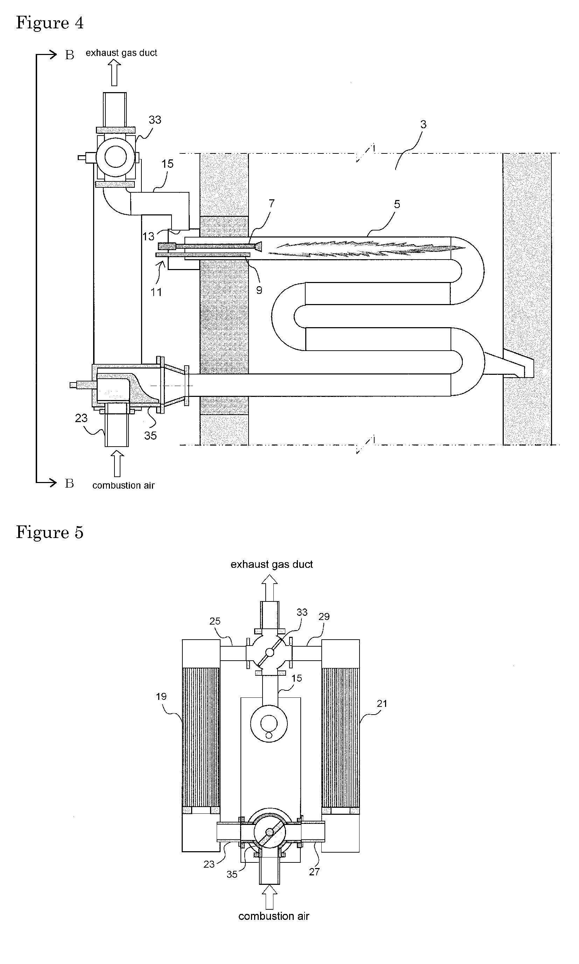

Figs. 4 and 5 are diagrams showing another embodiment of the present invention, with Fig. 5 being a diagram viewed in direction of the arrows B-B in Fig. 4. In the present embodiment, the first four-way switching valve 31, explained to be a butterfly valve in Embodiment 1 is replaced by a valve having the shape shown in Figs. 4 and 5.

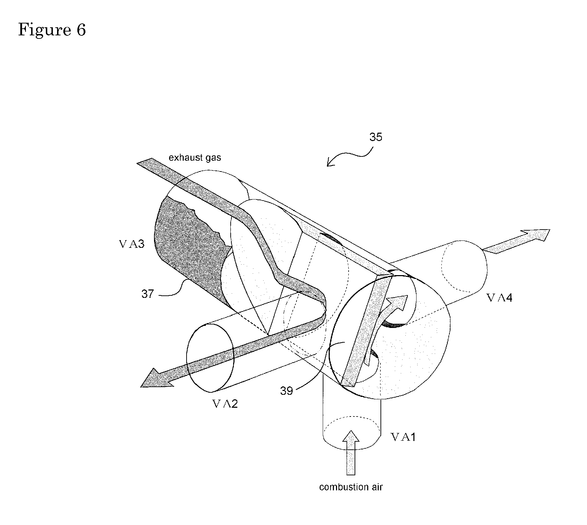

Fig. 6 is a diagram showing the internal structure of the first four-way switching valve 35 of the present embodiment in detail. As shown in Fig. 6, in the first four-way switching valve 35 of the present embodiment, one opening portion of a cylindrical valve casing 37 serves as a connection opening (VA3) that is linked to the exhaust side of the radiant tube 5, and there are three connection openings (VA1), (VA2) and (VA4) provided on the outer circumferential surface of the valve casing 37. Moreover, a rotating damper 39 is placed inside the valve casing 37. In the state shown in Fig. 6, the connection opening (VA3) is communicatively connected to the connection opening (VA2), and the connection opening (VA1) is communicatively connected to the connection opening (VA4). By rotating the rotating damper 39 by 90 degrees in the clockwise direction from this state, switching is possible such that the connection opening (VA3) is communicatively connected with the connection opening (VA4), and the connection opening (VA1) is communicatively connected with the connection opening (VA2).
It should be noted that a lid (not shown in the drawings) is placed at the end of the valve casing 37 shown in Fig. 6 on the side opposite to the connection opening (VA3), and the end of the rotating damper 39 slides against the inner side of this lid. Moreover, the rotating damper 39 is provided with a shaft that penetrates the lid at this end, for example, and this shaft is rotatively driven by an actuator provided outside the lid.

By providing the first four-way switching valve with a shape as in the present embodiment, the exhaust pipe 17 connected to the exhaust side of the radiant tube 5 can be arranged on the extension of the radiant tube 5 without intersecting the radiant tube 5 at a right angle, and the surroundings of the first four-way switching valve can be arranged more compactly.
It should be noted that the reason why in the present embodiment the shape of the first four-way switching valve is changed, whereas the shape of the second four-way switching valve is the same as in Embodiment 1 is as follows.
The second four-way switching valve is arranged on the side where the burner device 11 is attached in the radiant tube 5, and the ends of the main burner and the pilot burner extend to the end (burner head) of the radiant tube 5 on the side where the burner device 11 is attached, and moreover, a peek window is arranged to this end, so that the air supply pipe 15 connected to the second four-way switching valve is ordinarily connected at a right angle with respect to the radiant tube 5, so that there is no need to use the shape employed in the present embodiment.

### THIRD EMBODIMENT

In the above-described Embodiments 1 and 2, the present invention was taken to be the overall device of a radiant tube burner 1 having a burner device 11 at one end of a radiant tube 5, a pair of heat storage elements 19 and 21 being arranged outside the furnace, and embodiments were explained for this overall device.
However, the first heat storage element 19, the second heat storage element 21, the first four-way switching valve 31, the second four-way switching valve 33 and the pipe system linking the same can be separated from the radiant tube, and can be configured as a heat storage element unit. By attaching a heat storage element unit configured like this to a conventional radiant tube burner having one set of a burner device and not having a heat storage element, it is easy to modify a conventional radiant tube burner that is not of the heat storing type to a heat storing radiant tube burner.
Needless to say, if a heat storage unit according to the present embodiment is attached to a conventional radiant tube burner, the temperature of the pre-heated air becomes high, so that a corresponding modification should also be made for example for the heat resistance of parts through which the combustion air passes in the conventional radiant tube burner.

Thus, by configuring the first heat storage element 19, the second heat storage element 21, the first four-way switching valve 31, the second four-way switching valve 33, and the pipe system linking these as one heat storage element unit as explained in Embodiments 1 and 2, it is possible to modify a conventional radiant tube burner that is not of the heat storing type into a heat storing radiant tube burner.

### FOURTH EMBODIMENT

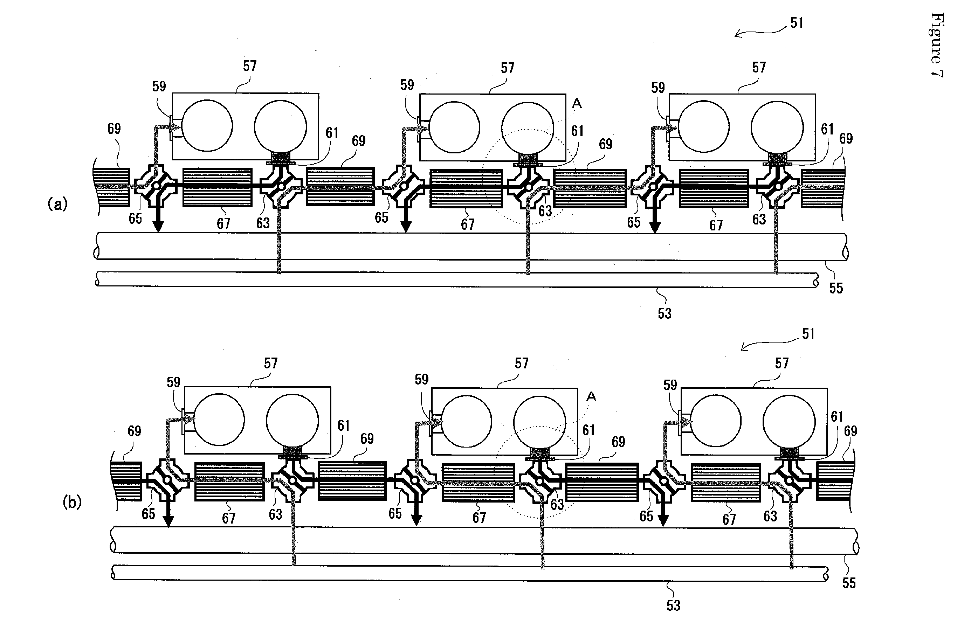

The present embodiment is explained with reference to Figs. 7 to 10. A radiant tube burner apparatus 51 according to the present embodiment includes a combustion air pipe 53 that is provided extending along the direction in which the steel strip moves and supplies combustion air, as well as an exhaust gas duct 55 that is provided extending along the direction in which the steel strip moves and is for exhausting exhaust gas. This radiant tube burner apparatus 51 is used in a furnace for a horizontal continuous annealing line, in which steel strips are heated while being conveyed in horizontal direction.

In this furnace for a horizontal continuous annealing line, a plurality of radiant tube burners 57 are arranged horizontally next to one another, and in general, these are partitioned into combustion control zones, with radiant tube burners 57 being arranged in each zone. Fig. 7 shows three adjacent radiant tube burners 57, which are some of the radiant tube burners arranged in the same zone. Figs. 7(a) and 7(b) show switching states of a first four-way switching valve 63 and a second four-way switching valve 65, which are explained below.
In the following explanations, the radiant tube burner 57 placed in the middle of the drawings is explained, and if necessary, the radiant tube burners 57 are specified as "the radiant tube burners 57", "the adjacent radiant tube burners 57", "the right adjacent radiant tube burner 57", or "the left adjacent radiant tube burner 57".

As in Embodiment 1, a burner device made of a main burner and a pilot burner as well as an air supply opening 59 supplying combustion air are arranged at one end of the radiant tube of the radiant tube burners 57. An exhaust opening 61 is arranged at the other end of the radiant tube, the first four-way switching valve 63 is arranged at the portion where the exhaust opening 61 is connected to the combustion air pipe 53, and a second four-way switching valve 65 is arranged at the portion where the air supply opening 59 is connected to the exhaust gas duct 55.

The second four-way switching valve 65 and the first four-way switching valve 63 are connected by piping, and the first heat storage element 67 is arranged in this connection path. Moreover, the first four-way switching valve 63 and the second four-way switching valve 65 of the adjacent radiant tube burner 57 are also connected by piping, and the second heat storage element 69 is arranged in this connection path.

The first four-way switching valve 63 switches between a gas flow in which it lets the exhaust gas exhausted from the radiant tube burner 57 flow to the first heat storage element 67, and lets the combustion air from the combustion air pipe 53 flow to the second heat storage element 69 (see Fig. 7(a)), and a gas flow in which it lets the exhaust gas from the radiant tube burner 57 flow to the second heat storage element 69, and lets the combustion air from the combustion air pipe 53 flow to the first heat storage element 67 (see Fig. 7(b)).

Moreover, the second four-way switching valve 65 switches between a gas flow in which it lets the exhaust gas that has passed through the first heat storage element 67 flow to the exhaust gas duct 55, and lets the combustion air that has passed through the second heat storage element 69 flow to the air supply opening 59 (see Fig. 7(a)), and a gas flow in which it lets the combustion air that has passed through the first heat storage element 67 flow to the air supply opening 59, and lets the exhaust gas from the neighboring radiant tube burner 57 to the left that has passed through the second heat storage element 69 flow to the exhaust duct 55 (see Fig. 7(b)).

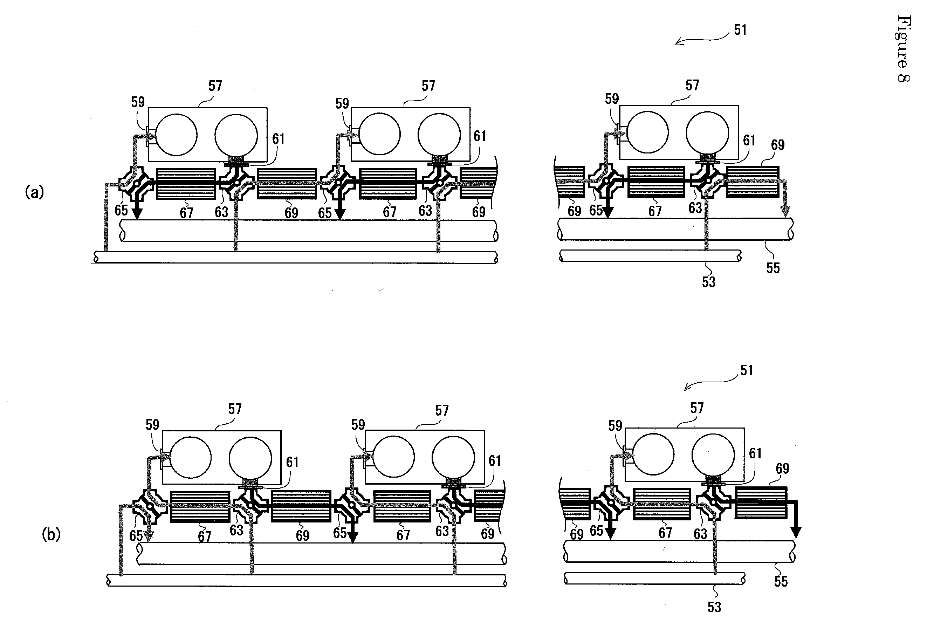

Fig. 8 is a diagram showing the pipe connections of the burners at the end in each zone. As shown at the left end in Fig. 8, in the case of a radiant tube burner 57 at the left end of a zone, there is no heat storage element to the left of the second four-way switching valve 65, so that the combustion air is supplied from the combustion air pipe 53 directly to the air supply opening 59. At the right end of the zone, there is a second heat storage element 69 to the right of the first four-way switching valve 63, but this second heat storage element 69 is provided for the function of lowering the temperature of the exhaust gas that flows to the exhaust gas duct 55, and can be omitted if the heat resistance of the exhaust gas duct 55 is high enough.

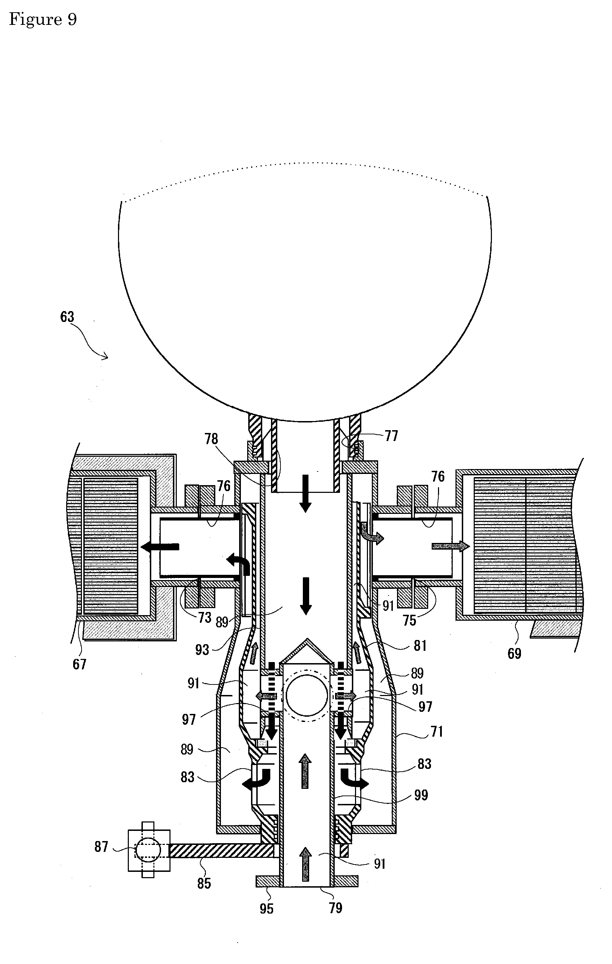

The following is an explanation of the structure of the first four-way switching valve 63, based on Fig. 9, which shows in detail a cross-sectional view of the portion A indicated by the dotted circle in Fig. 7(a).
The first four-way switching valve 63 is provided with a tubular casing 71, and on the sides thereof with a first connection opening 73 that is connected to the side of the first heat storage element 67 and a second connection opening 75 that is connected to the side of the second heat storage element 69. It should be noted that a double-tube construction, in which inner tubes 76 serving as flow paths are inserted into the connection portion at the first connection opening 73 and the second connection opening 75, prevents that heat is transmitted directly to the outer tube, reducing heat loss.
A third connection opening 77 that is connected to the exhaust opening 61 is provided at the upper end in axial direction of the casing 71, and also at this third connection opening 77, an inner tube 78 is placed to prevent that heat of the exhaust gas is transmitted directly to the outer tube, reducing heat loss.
Moreover, a fourth connection opening 79 that is connected to the combustion air pipe 53 is provided at the lower end in axial direction of the casing 71.

Inside the casing 71, a tubular valve body 81 partitions the inside of the casing 71 into a radially inner side and a radially outer side and can be turned with the center axis of the casing 71 serving as the turning axis. The upper end of the valve body 81 is open, and its lower end has opening portions 83 that open to the side. By turning the valve body 81, the communication between the space that is partitioned by valve body 81 on the one hand and the first connection opening 73 and the second connection opening 75 on the other hand can be switched. This will be explained in detail in the following.
The lower end of the valve body 81 is linked to an actuator 87 for turning it. Fig. 9 shows an example in which an arm 85 is linked to the lower end of the valve body 81, and the valve body 81 is turned by rotating the arm 85 with the actuator 87.

Provided on the inner side of the valve body 81 are a first flow path 89 whose upper end is in communication with the third connection opening 77, and whose lower end is in communication with the outer wall side of the valve body 81 via the opening portions 83 that are provided at the lower side of the valve body 81, and a second flow path 91 whose lower end is in communication with the fourth connection opening 79 and whose upper end is in communication with the inner wall side of the valve body 81.
The first flow path 89 is formed by a first flow path tube 93 that is arranged on the inner side of the valve body 81 such that its upper end is communicatively connected to the third connection opening 77, and its lower end is communicatively connected to the openings at the lower side of the valve body 81.
Moreover, the second flow path 91 is formed by a second flow path tube 99 that includes on its lower end a flange 95, and that is provided with four short tubes 97 whose upper end surfaces are closed and that extend laterally from the upper end portions.

When the first four-way switching valve 63 configured in this manner is switched to the state shown in Fig. 7, exhaust gas entering from the third connection opening 77 passes through the first flow path 89, is guided to the first connection opening 73 and is exhausted to the first heat storage element 67, as shown in Fig. 9. Moreover, combustion air that is supplied from the fourth connection opening 79 passes the second flow path 91, is guided to the second connection opening 75, and is exhausted to the second heat storage element 69. Thus, concerning the flow of the exhaust gas and the combustion air, until the exhaust gas entering from the third connection opening 77 reaches the openings at the lower side of the valve body 81, it exchanges heat with the combustion air via the flow path wall of the first flow path 89, and after it has passed through the opening portion 83, it exchanges heat with the combustion air via the wall of the valve body 81.
Thus, by letting the exhaust gas that has entered the first four-way switching valve 63 exchange heat with the combustion gas, a temperature increase of the casing 71 of the first four-way switching valve 63 can be suppressed.

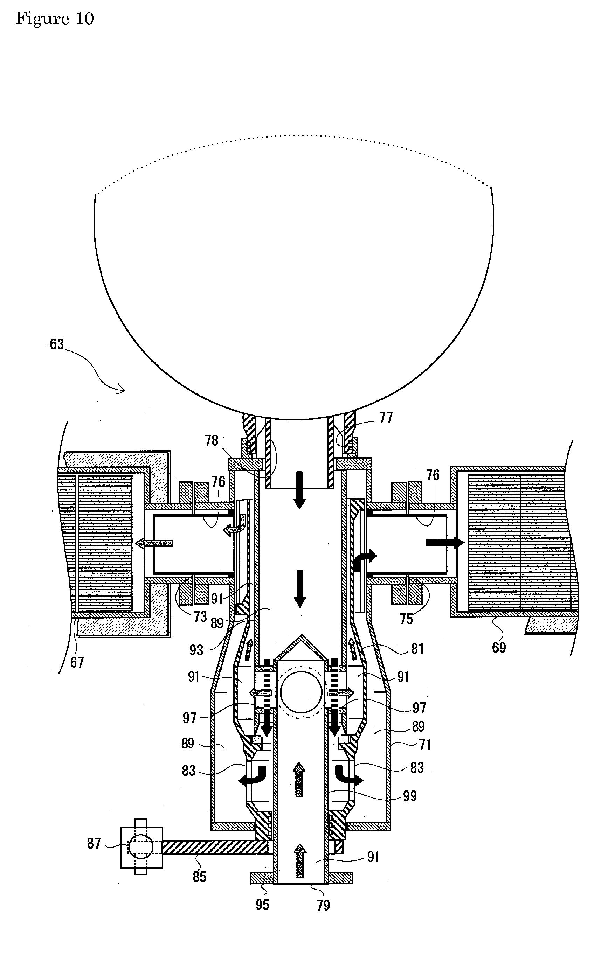

When the valve body 81 of the first four-way switching valve 63 is turned, the first flow path 89 is communicatively connected to the second connection opening 75 on the right side in the drawing, and the second flow path 91 is communicatively connected to the first connection opening 73 on the left side in the drawing, as shown in Fig. 10. Consequently, the exhaust gas that enters from the third connection opening 77 is guided to the second connection opening 75 and passes through the second heat storage element 69, while the combustion air supplied from the fourth connection opening 79 is guided to the first connection opening 73 and passes through the first heat storage element 67 (see Fig. 7(b)).

A valve having the same structure as the first four-way switching valve 63 can also be used for the second four-way switching valve 65. In this case, the first connection opening 73 is connected to the second heat storage element 69, the second connection opening 75 is connected to the first heat storage element 67, the third connection opening 77 is connected to the side of the air supply opening 59 of the radiant tube burner 57, and the fourth connection opening 79 is connected to the side of the exhaust gas duct 55.

### OPERATION

The following is an explanation of the operation of the present embodiment configured as described above.
When the burner burns in the state shown in Fig. 7(a), the exhaust gas is exhausted via the exhaust opening 61 through the first four-way switching valve 63, the first heat storage element 67, and the second four-way switching valve 65 to the exhaust gas duct 55. In this situation, the first heat storage element 67 is pre-heated by the exhaust gas, and the exhaust heat is recovered.
On the other hand, the combustion air is supplied via the first four-way switching valve 63 of the radiant tube burner 57 adjacent to the left in the drawing, the second heat storage element 69, and the second four-way switching valve 65 to the air supply opening 59. In this situation, the combustion air is heated by heat exchange with the second heat storage element 69 when it passes the second heat storage element 69, and then supplied to the air supply opening 59.

When operation continues for a predetermined time in the state shown in Fig. 7(a), the temperature of the second heat storage element 69 drops due to the passage of the introduced combustion air, and conversely the temperature of the first heat storage element 67 rises due to the passage of the exhaust gas. When the temperature of the second heat storage element 69 drops too much, the heating of the combustion air becomes insufficient, so that when a predetermined time has lapsed, the first four-way switching valve 63 and the second four-way switching valve 65 are switched by a switching valve controller not shown in the drawings to the state shown in Fig. 7(b).
In the state shown in Fig. 7(b), the exhaust gas passes from the exhaust opening 61 through the first four-way switching valve 63, the second heat storage element 69 and the second four-way switching valve 65 of the radiant tube burner 57 adjacent to the right in the drawing and is exhausted to the exhaust gas duct 55. In this situation, the second heat storage element 69 is pre-heated, and the exhaust heat is recovered.
On the other hand, the combustion air is supplied from the combustion air pipe 53 via the first four-way switching valve 63, the first heat storage element 67, and the second four-way switching valve 65 to the air supply opening 59. In this situation, when the combustion air passes through the second heat storage element 69, it is heated due to the heat exchange with the heat storage element, and supplied to the air supply opening 59.

In this manner, also in the present embodiment, as in Embodiment 1, by operating the first four-way switching valve 63 and the second four-way switching valve 65 at constant time intervals to switch between the state of Fig. 7(a) and the state of Fig. 7(b), the first heat storage element 67 and the second heat storage element 69 alternate between heat dissipation and heat absorption, and combustion air that is pre-heated to a high temperature is constantly supplied to the radiant tube burner 57, whereas exhaust gas is constantly exhausted at a low temperature.
Also, there is one burner per radiant tube burner whose combustion is not interrupted, so that the structure is simplified and a highly efficient exhaust heat recovering heating apparatus is accomplished that is superior with regard to maintenance, cost and reliability.

Moreover, in the present embodiment, by employing a configuration in which a plurality of radiant tube burners 57 are arranged next to each other in the direction in which the steel strip advances, each of the radiant tube burners 57 is provided with a first four-way switching valve 63 and a second four-way switching valve 65, a first heat storage element 67 is placed between the first four-way switching valve 63 and the second four-way switching valve 65, and a second heat storage element 69 is placed between the second four-way switching valve and the first four-way switching valve 63 of the adjacent radiant tube burner 57, an arrangement is realized in which the piping is made as short as possible and heat losses are minimized. Therefore, in a horizontal furnace heat storage elements can be arranged in an orderly fashion in the limited space to the side of a furnace requiring such machinery as support rollers, their bearings and drive motors.

### INDEX TO REFERENCE NUMERALS

- 1: radiant tube burner
- 3: furnace
- 5: radiant tube
- 7: main burner
- 9: pilot burner
- 11: burner device
- 12: fuel gas pipe of main burner
- 13: air supply opening
- 14: combustion air pipe of pilot burner
- 15: air supply pipe
- 16: exhaust opening
- 17: exhaust pipe
- 18: fuel gas pipe of pilot burner
- 19: first heat storage element
- 21: second heat storage element
- 23: first entry-side pipe
- 25: first exhaust-side pipe
- 27: second entry-side pipe
- 29: second exhaust-side pipe
- 31: first four-way switching valve
- 33: second four-way switching valve
- 35: first four-way switching valve
- 37: valve casing
- 39: rotating damper
- 51: radiant tube burner apparatus
- 53: combustion air pipe
- 55: exhaust gas duct
- 57: radiant tube burner
- 59: air supply opening
- 61: exhaust opening
- 63: first four-way switching valve
- 65: second four-way switching valve
- 67: first heat storage element
- 69: second heat storage element
- 71: casing
- 73: first connection opening
- 75: second connection opening
- 79: inner tubes
- 77: third connection opening
- 78: inner tube
- 79: fourth connection opening
- 81: valve body
- 83: opening portion
- 85: arm
- 87: driving means
- 89: first flow path
- 91: second flow path
- 93: first flow path tube
- 95: flange
- 97: short tube
- 99: second flow path tube

## Claims

1. A radiant tube burner apparatus for use in a heating apparatus of a continuous annealing line for steel strips comprising a combustion air pipe supplying combustion air and an exhaust gas pipe for exhausting an exhaust gas, the radiant tube burner apparatus comprising:
a burner that is arranged at one end of a radiant tube;
an air supply opening that supplies the combustion air to the burner;
an exhaust opening that is arranged at the other end of the radiant tube;
a first four-way switching valve that is arranged in a path connecting the exhaust opening with the combustion air pipe;
a second four-way switching valve that is arranged in a path connecting the air supply opening with the exhaust gas pipe;
a first heat storage element that is arranged in one parallel path connecting the second four-way switching valve with the first four-way switching valve, and
a second heat storage element that is arranged in another parallel path connecting the second four-way switching valve with the first four-way switching valve;
wherein the first four-way switching valve can be switched between a gas flow in which the exhaust gas from the exhaust opening flows to the first heat storage element and the combustion air from the combustion air pipe flows to the second heat storage element, and a gas flow in which the exhaust gas from the exhaust opening flows to the second heat storage element, and the combustion air from the combustion air pipe flows to the first heat storage element; and
the second four-way switching valve can be switched between a gas flow in which the exhaust gas that has passed through the first heat storage element flows to the exhaust gas pipe, and the combustion air that has passed through the second heat storage element flows to the air supply opening, and a gas flow in which the exhaust gas that has passed through the second heat storage element flows to the exhaust gas pipe, and the combustion air that has passed through the first heat storage element flows to the supply opening.

2. The radiant tube burner according to claim 1, wherein the first four-way valve comprises:
a valve casing made of a tube-shaped body having an opening portion at one end portion;
a rotation damper that is arranged inside the valve casing; and
wherein three connection openings that are provided in an outer circumferential surface of the valve casing;
the opening portion of the valve casing is connectable to the exhaust gas pipe; and
the gas flow can be switched by rotating the rotation damper.

3. A radiant tube burner apparatus for use in a heating apparatus of a horizontal continuous annealing line for heating steel strips while the steel strips are transported in horizontal direction, the heating apparatus comprising a combustion air pipe supplying combustion air and an exhaust gas pipe for exhausting an exhaust gas, the radiant tube burner apparatus comprising:
a plurality of radiant tube burners that are arranged horizontally along a direction in which said steel strip is moved;
each of the radiant tube burners comprising:
a burner that is arranged at one end of a radiant tube;
an air supply opening that supplies the combustion air to the burner;
an exhaust opening that is arranged at the other end of the radiant tube;
a first four-way switching valve that is arranged in a portion connecting the exhaust opening and the combustion air pipe;
a second four-way switching valve that is arranged in a portion connecting the air supply opening with the exhaust gas pipe;
a first heat storage element that is arranged in a path connecting the second four-way switching valve and the first four-way switching valve, and
a second heat storage element that is arranged in a path connecting the first four-way switching valve and a second four-way switching valve of a neighboring radiant tube burner;
wherein the first four-way switching valve can be switched between a gas flow in which the exhaust gas from the radiant tube burner flows to the first heat storage element and the combustion air from the combustion air pipe flows to the second heat storage element, and a gas flow in which the exhaust gas from the radiant tube burner flows to the second heat storage element, and the combustion air from the combustion air pipe flows to the first heat storage element; and
the second four-way switching valve can be switched between a gas flow in which the exhaust gas that has passed through the first heat storage element flows to the exhaust gas pipe, and the combustion air that has passed through the second heat storage element flows to the air supply opening, and a gas flow in which the combustion air that has passed through the first heat storage element flows to the air supply opening, and the exhaust gas from the neighboring radiant tube that has passed through the second heat storage element flows to the exhaust gas pipe.

4. A radiant tube burner apparatus according to claim 1 or 3,
wherein the first four-way switching valve and/or the second four-way switching valve comprise:
a tubular casing having a first connection opening with a second opening in a side surface,
a third connection opening provided at one end in axial direction of the casing,
a fourth connection opening provided at the other end in axial direction of the casing, and
a valve body forming a first flow path that is arranged within the casing and is turnable around the axis of the casing and that is communicatively connected to the third connection opening within the casing, and a second flow path that is communicatively connected to the fourth connection opening,
wherein the radiant tube burner apparatus is arranged such that, by turning the valve body, a switch is made between a flow path in which the first flow path is communicatively connected to the first connection opening and the second flow path is communicatively connected to the second connection opening, and a flow path in which the first flow path is communicatively connected to the second connection opening and the second flow path is communicatively connected to the first connection opening.

5. A radiant tube burner apparatus according to claim 4,
wherein the valve body is made of a tubular body that partitions the inside of the casing into a radially inner region and a radially outer region,
the first flow path includes a flow path that passes through the inside of the valve body and extends from an end portion of the valve body to the outside of the valve body, and
the second flow path includes a flow path that passes through the inside of the valve body and passes between the inside of the valve body and a flow path wall of the first flow path.

6. A heat storage element unit that can be attached to a radiant tube burner that is arranged in a heating facility comprising a combustion air pipe and an exhaust gas pipe and that is provided with a burner only at one end portion of a radiant tube, the heat storage element unit comprising:
a first four-way switching valve that is arranged in a path connecting the exhaust opening with the combustion air pipe;
a second four-way switching valve that is arranged in a path connecting the air supply opening with the exhaust gas pipe;
a first heat storage element that is arranged in one parallel path connecting the second four-way switching valve with the first four-way switching valve; and
a second heat storage element that is arranged in another parallel path connecting the second four-way switching valve with the first four-way switching valve;
wherein the first four-way switching valve can be switched between a gas flow in which the exhaust gas from the exhaust opening flows to the first heat storage element and the combustion air from the combustion air pipe flows to the second heat storage element, and a gas flow in which the exhaust gas from the exhaust opening flows to the second heat storage element, and the combustion air from the combustion air pipe flows to the first heat storage element; and
the second four-way switching valve can be switched between a gas flow in which the exhaust gas that has passed through the first heat storage element flows to the exhaust gas pipe, and the combustion air that has passed through the second heat storage element flows to the air supply opening, and a gas flow in which the exhaust gas that has passed through the second heat storage element flows to the exhaust gas pipe, and the combustion air that has passed through the first heat storage element flows to the supply opening.

7. The heat storage element unit according to claim 6, wherein the first four-way switching valve comprises:
a valve casing made of a cylindrical body having an opening portion at one end portion;
a rotation damper that is arranged inside the valve casing; and
three connection openings that are provided in an outer circumferential surface of the valve casing;
wherein the opening portion of the valve casing is connectable to the exhaust gas pipe; and
the gas flow can be switched by rotating the rotation damper.
